(19) Europäisches Patentamt
European Patent Office
Office européen des brevets

(11) EP 1 472 408 B1

(12) **FASCICULE DE BREVET EUROPEEN**

(45) Date de publication et mention de la délivrance du brevet:
**26.11.2008 Bulletin 2008/48**

(21) Numéro de dépôt: **03722653.7**

(22) Date de dépôt: **07.02.2003**

(51) Int Cl.:
***D06N 3/12*** (2006.01) ***D06M 15/643*** (2006.01)
***C09D 183/04*** (2006.01) ***D06M 15/65*** (2006.01)

(86) Numéro de dépôt international:
**PCT/FR2003/000382**

(87) Numéro de publication internationale:
**WO 2003/066960 (14.08.2003 Gazette 2003/33)**

(54) **UTILISATION D' UNE EMULSION INVERSE A BASE DE SILICONE RETICULABLE POUR LA REALISATION DE REVETEMENTS "IMPER-RESPIRANTS"**

VERWENDUNG VON EINER INVERT-EMULSION AUF DER BASIS VON VENETZBAREN SILIKONEN ZUR HERSTELLUNG VON WASSERDICHTEN, ATMUNGSFÄHIGEN BESCHICHTUNGEN

USE OF A CROSSLINKABLE SILICONE INVERT EMULSION FOR PRODUCING BREATHABLE COATINGS

(84) Etats contractants désignés:
**AT BE BG CH CY CZ DE DK EE ES FI FR GB GR HU IE IT LI LU MC NL PT SE SI SK TR**

(30) Priorité: **08.02.2002 FR 0201578**

(43) Date de publication de la demande:
**03.11.2004 Bulletin 2004/45**

(73) Titulaire: **Bluestar Silicones France**
**69486 Lyon Cedex 03 (FR)**

(72) Inventeurs:
- **BRANLARD, Paul**
  **F-69005 LYON (FR)**
- **DERUELLE, Martial**
  **F-69440 Mornant (FR)**
- **GIRAUD, Yves**
  **F-69110 SAINTE FOY LES LYON (FR)**
- **MARTIN, Nadia**
  **F-69006 LYON (FR)**

(56) Documents cités:
**EP-A- 0 822 219** **EP-A- 1 088 540**
**DD-A- 133 197** **FR-A- 2 787 803**
**US-A- 3 076 726** **US-A- 3 434 875**
**US-A- 4 625 010** **US-A- 5 789 025**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 472 408 B1

Printed by Jouve, 75001 PARIS (FR)

## Description

L'invention se rapporte au domaine général de l'enduction silicone sur différents supports souples, par exemple des textiles, en polymères synthétiques (polyamide, polyester...).

Plus précisément, l'invention concerne l'enduction de matériaux souples (ou flexibles) avec des compositions liquides contenant un ou plusieurs polyorganosiloxanes (POS) réticulables par polyaddition, par polycondensation, par voie cationique ou par voie radicalaire, de façon à former un film ou revêtement protecteur ayant notamment des propriétés imper-respirantes (imperméable à l'eau et perméable à la vapeur d'eau) et/ou hydrophobes.

Les supports souples, notamment en textile, susceptibles d'être revêtus de films en élastomères silicones réticulés sont par exemple des tissus pour l'habillement.

La bande de supports souple est enduite sur au moins une de ses faces d'un film silicone apte à réticuler, avec l'assistance de moyens d'activation de la réticulation disposés en aval de la tête d'enduction. Ces moyens d'activation de la réticulation peuvent être des émetteurs de chaleur, de radiations (e.g. UV) ou de faisceaux d'électrons entre autres.

Dans les industries de l'habillement, des tissus techniques ou d'ameublement, il existe un besoin constant en étoffes ne laissant pas passer l'eau mais uniquement la vapeur d'eau. Il s'agit en effet d'un élément de confort particulièrement important pour les utilisateurs que d'être protégés de l'eau, qu'elle provienne de l'extérieur comme l'eau de pluie ou de l'intérieur comme la vapeur d'eau de transpiration vouée à une condensation rapide. Pour éviter cette mise en contact avec l'eau, la barrière textile doit permettre une évacuation rapide de l'eau endogène lorsqu'elle est sous forme vapeur avant qu'elle ne se condense et doit s'opposer à la pénétration de l'eau exogène, même lorsque celle-ci est sous (légère) pression.

Outre ces performances d'imperméabilité à l'eau liquide et de "respirabilité" à la vapeur d'eau, d'autres propriétés sont requises pour les supports souples, notamment textiles, à savoir notamment : la perméabilité à l'air, l'effet perlant ...

Pour pouvoir être "imper-respirant", un support souple doit être percé de millions de pores assez petits pour ne pas laisser passer les gouttelettes d'eau mais permettre uniquement le passage de l'eau sous forme vapeur.

Deux techniques sont employées pour obtenir cette propriété : le contre collage et l'enduction.

Le contre-collage consiste à laminer une membrane poreuse et très fine sur la couche extérieure du vêtement (2 couches) ou entre la couche extérieure et la doublure (3 couches, exemples GORE®).

Par ailleurs, l'enduction consiste à passer un enduit sur le vêtement sur lequel des microtrous laisseront passer la vapeur d'eau. Le film d'enduction peut être par exemple en polyuréthane microporeux.

Il existe un certain nombre de brevets concernant principalement des supports souples (membranes) "imper-respirantes" microporeuses, imperméables à l'eau et perméables à la vapeur d'eau, en PolyTétraFluoroEthylène expansé, (par ex US-B-5,948,707; US-B-4,187,390; US-B-3,953,566; US-B-4,194,041; WO-A-99/39038), ou à base de polyuréthane (par ex EP-A-0 503 826).

Les silicones sont utilisés dans ces réalisations comprenant des membranes "imper-respirantes", microporeuses.

En premier lieu, les silicones peuvent intervenir pour former des revêtements d'imperméabilisation des supports. Cela est illustré par l'EP-A-0 503 826 qui décrit des nouveaux composés organosiliconés, néopentasiloxanes, Si $(OSiR^2Q)_4$ avec Q constitué de motifs oxyde d'éthylène et ou oxyde de propylène et l'utilisation de ces silicones lors de la formation d'un film imperméable à l'eau et perméable à la vapeur d'eau. En effet, les membranes polyuréthane souffrent d'une faible résistance à l'abrasion et d'une perte d'imperméabilité à l'eau quand la perméabilité à la vapeur d'eau augmente. Selon l'EP-A-0 503 826, l'utilisation de ces composés organosiliconés à titre de co-ingrédients dans les revêtements polyuréthane, permet de rendre ces derniers plus performants.

Comme décrit dans le WO-A-01/26495, les silicones peuvent également servir à imperméabiliser les coutures.

Selon l'US-B-5,948,707 les silicones peuvent contribuer à l'amélioration des propriétés mécaniques des membranes "imper-respirantes", microporeuses. Il est plus précisément question dans ce brevet, d'une membrane en PTFE expansé dont l'une des faces est recouverte d'un revêtement élastomère discontinu, qui apporte les propriétés non-glissantes par augmentation substantielle du coefficient de friction.

Le WO-A-91/17205 divulgue la mise en oeuvre de silicones élastomères réticulables ou non, pour fabriquer des réseaux interpénétrés de résine PTFE et de silicone et améliorer ainsi les caractéristiques physiques du matériau. Ces structures sont microporeuses, imperméables et perméables à la vapeur d'eau avec des caractéristiques physiques et une résistance aux détergents améliorées. La silicone pénètre à l'intérieur des pores produisant un revêtement des noeuds de croisement des fibres et des fibres elles-mêmes.

Il ressort de cette revue de l'état de la technique qu'il n'est pas connu de mettre en oeuvre un élastomère silicone, et encore moins une émulsion "eau-dans-huile silicone", comme matériau constitutif essentiel de supports souples microporeux, imperméables à l'eau et perméables à la vapeur d'eau.

Pourtant, les confections microporeuses "imper-respirantes" comprenant du silicone connues, restent perfectibles pour ce qui concerne leur imperméabilité à l'eau et leur imperméabilité à la vapeur d'eau, tout en satisfaisant à la

contrainte économique.

Par ailleurs, des améliorations sont toujours souhaitables en termes économiques et en termes de conditions opératoires industrielles : facilité de mise en oeuvre / hygiène et sécurité.

Dans ces circonstances, un objectif essentiel de l'invention est de proposer un procédé efficace de réalisation de revêtements imperméables à l'eau et perméables à la vapeur d'eau, sur supports souples, ce procédé permettant une amélioration de la perméabilité à la vapeur d'eau des silicones tout en conservant l'imperméabilité à l'eau.

Un autre objectif essentiel de l'invention est de proposer un procédé économique, aisé à mettre en oeuvre et sûr, de réalisation de revêtements imperméables à l'eau et perméables à la vapeur d'eau, sur supports souples.

Un autre objectif essentiel de l'invention est de proposer une nouvelle matière première silicone pour des procédés de réalisation de revêtements imperméables à l'eau et perméables à la vapeur d'eau, sur supports souples, cette nouvelle matière première se devant d'être performante (imperméabilité à l'eau/perméabilité à la vapeur d'eau), économique et de manipulation aisée et inoffensive.

Un autre objectif essentiel de l'invention est de proposer des tissus "imper-respirants" siliconés, tout à fait efficaces, peu coûteux et pouvant être fabriqués dans des conditions industrielles.

Ces objectifs, parmi d'autres, sont atteints par la présente invention qui concerne, tout d'abord, un procédé de réalisation de revêtements imperméables à l'eau et perméables à la vapeur d'eau, sur supports souples, caractérisé en ce qu'il consiste essentiellement :

- ♦ à appliquer sur au moins l'une des faces du support, de façon à former un film, une émulsion silicone inverse eau-dans-huile, comportant :
    - une phase continue huileuse silicone φs:
        - ○ réticulable en élastomère
        - ○ et comprenant :
            - → -A- au moins un polyorganosiloxane (POS) réticulable par polyaddition, par polycondensation, par voie cationique ou par voie radicalaire ;
            - → -B- éventuellement au moins un composé organosilicique réticulant ;
            - → -C- éventuellement au moins un catalyseur de la réaction de réticulation;
    - une phase aqueuse φa comprenant au moins 20 % en poids d'eau,
    - au moins un stabilisant,
- ♦ à faire en sorte que la phase silicone φs réticule et qu'intervienne une élimination d'eau.

Il s'agit donc d'employer une émulsion inverse eau-dans-huile silicone réactive filmogène, pour enduire un support souple, par exemple une membrane micro-poreuse, en vue de former après réticulation, un revêtement silicone élastomère lui aussi microporeux.

Les émulsions silicone inverses sont constituées de gouttelettes d'eau dans une phase continue huile silicone. Les émulsions eau-dans-huile selon l'invention ne comprennent pas les émulsions eau-dans-huile silicone obtenues à partir d'élastomères silicones en solution dans des solvants organiques.

Elles peuvent être obtenues par des procédés d'émulsification bien connus de l'homme de l'art et qui impliquent le mélange d'une phase aqueuse φa et d'une phase huileuse φs sans ou avec broyage, c'est à dire sous fort cisaillement.

Sans vouloir être lié à la théorie, le principe de cette invention serait donc le suivant: enduite sur le support à traiter, l'émulsion inverse constitue un film. La phase huile de l'émulsion est ensuite réticulée pour former le revêtement et la phase aqueuse éliminée par évaporation (soit lors de la réticulation, soit par chauffage). La disparition de l'eau entraîne alors la formation de micropores dans le film silicone. Il est donc nécessaire d'utiliser une huile réactive siliconée.

D'autre part, l'élimination de l'eau contenue dans l'émulsion apporte la "respirabilité" au tissu.

Si l'épaisseur de l'enduction est de la taille des particules, l'évaporation de l'eau crée réellement des pores, c'est-à-dire un contact direct entre l'extérieur et l'intérieur du tissu.

En revanche, si l'enduction est plus épaisse que les gouttelettes d'eau, il n'y aura a priori pas ce contact. Néanmoins, il est alors possible qu'il y ait percolation et que des "chemins" soient créés lors de l'évaporation et laissent ainsi passer la vapeur d'eau.

De préférence, la phase silicone φs possède une viscosité η à 25°C inférieure à 2000 mPa.s, de préférence comprise entre 100 et 1400 mPa.s, et plus préférentiellement encore comprise entre 100 et 800 mPa.s.

De préférence, la phase aqueuse φa comprend de 30 à 90% poids d'eau, et plus préférentiellement encore de 40 à 80% poids d'eau.

Concernant la granulométrie de la phase dispersée (eau), elle est choisie de manière à conférer une certaine stabilité à l'émulsion inverse. Cette granulométrie n'est pas critique. Il est préférable que cette phase aqueuse φa présente une granulométrie définie par son diamètre moyen D50 (en μm) telle que :

$$D50 \leq 100$$

de préférence $0{,}001 \leq D50 \leq 50$.

Au sens de l'invention, le paramètre $D_{50}$ est la taille médiane de la répartition granulométrique. Elle peut être déterminée sur le graphe de répartition granulométrique cumulé, obtenu par l'une des techniques analytiques évoquées ci-dessous, en déterminant la taille correspondant au cumul de 50% de la population des particules. Concrètement, ce paramètre granulométrique $D_{50}$ correspond à la dimension maximale moyenne d'au moins 50% de la masse de particules considérées, une $D_{50}$ de 10 μm indique que 50% des particules ont une taille inférieure à 10μm. Les mesures de granulométrie peuvent être effectuées par des techniques classiques telles que sédimentation, diffraction laser (par exemple COULTER® LSI30 : sous réserve d'utiliser une cuve adaptée à ces mesures), microscopie optique couplée à une analyse d'image, etc.

Le stabilisant est de préférence choisi dans le groupe comprenant :

- les tensioactifs non-ioniques, anioniques, cationiques, ou même zwitterioniques;
- les silicones polyéthers;
- les particules solides, de préférence des particules de silice éventuellement en combinaison avec au moins un co-stabilisant, préférablement sélectionnés parmi les tensioactifs non-ioniques, anioniques, cationiques ou même zwitterioniques;
- et leurs mélanges ;
- les particules solides éventuellement en combinaison avec au moins un co-stabilisant, étant particulièrement préférées.

Les tensioactifs sont choisis plus généralement en fonction de l'HLB. Le terme HLB (hydrophilic lipophilic balance) désigne le rapport de l'hydrophilie des groupements polaires des molécules de tensioactifs à l'hydrophobie de leur partie lipophile. Des valeurs de HLB sont notamment rapportées dans différents manuels de base tels que le «Handbook des excipients pharmaceutiques, The Pharmaceutical Press, London, 1994) ».

Les émulsions eau/silicone peuvent être stabilisées aussi via des silicones polyéthers (Silicone surfactants - Surfactant Science series V86 Ed Randal M. Hill (1999).

Par ailleurs, depuis le début du siècle les particules solides sont connues pour permettre la stabilisation d'émulsions eau dans huile. La formation d'une émulsion eau dans huile est favorisée quand l'angle de contact entre l'huile, le solide et l'eau est supérieur à 0˚C. L'ajout d'un co-stabilisant peut permettre d'améliorer la stabilité des émulsions. [Journal of colloïd and interface science 213, 352-359 (1999)].

Pour ce qui concerne la constitution de la phase continue huileuse silicone φs, il peut s'agir selon un premier mode de mise en oeuvre d'une composition de type de celle réticulable par voie cationique, en présence d'un photoamorceur et sous activation actinique. Plus précisément, une telle composition peut comprendre:

-A- au moins un POS porteur de groupements fonctionnels de réticulation, ces derniers étant de préférence choisis parmi les groupements comprenant au moins une fonction éthyléniquement insaturée - avantageusement acrylate et/ou alcényléther - et/ou époxyde et/ou oxéthane,

-B- éventuellement au moins un silane et/ou un POS porteur de groupements fonctionnels de même nature ou non que les groupements fonctionnels de réticulation du POS A,

-C- au moins un système photoamorceur de préférence choisi parmi les sels d'onium d'un élément des groupes 15 à 17 de la classification périodique ou d'un complexe organométallique d'un élément des groupes 4 à 10 de la classification périodique,

les groupements fonctionnels de réticulation étant de préférence choisis parmi les groupements comprenant au moins une fonction éthyléniquement insaturée - avantageusement acrylate et/ou alcényléther - et/ou époxyde et/ou oxéthanne.

De manière plus préférée encore, les POS A sont des époxysilicones et/ou des vinyléthersilicones qui sont :

→ soit linéaires ou sensiblement linéaires et constitués de motifs de formule (**I**), terminés par des motifs de formule (II.1) et (II.2),

→ soit cycliques et constitués par des motifs de formule (II.1) :

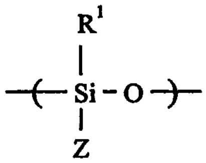 (II.1) 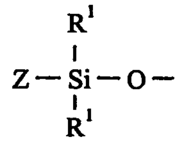 (II.2)

formules dans lesquelles :

- les symboles $R^1$ sont semblables ou différents et représentent :
  - soit un radical alkyle linéaire ou ramifié en $C_1$-$C_6$, éventuellement substitué, avantageusement par un ou des halogènes, les radicaux alkyles éventuellement substitués préférés étant : méthyle, éthyle, propyle, octyle et 3,3,3 trifluoropropyle,
  - soit un radical cycloalkyle en $C_5$-$C_8$, éventuellement substitué,
  - soit un radical aryle ou aralkyle, éventuellement substitué :
    - notamment par des halogènes et/ou des alcoxyles,
    - les radicaux phényle, xylyle, tolyle et dichlorophényle étant tout particulièrement sélectionnés,
  - et, plus préférentiellement encore, au moins 60 % molaire des radicaux $R^3$ étant des méthyles,
- les symboles Z sont semblables ou différents et représentent :
  - soit le radical $R^1$,
  - soit un groupement fonctionnel de réticulation correspondant à un reste époxyde ou vinyléther relié au silicium par l'intermédiaire d'un radical divalent contenant, avantageusement, de 2 à 20 atomes de carbone comportant, éventuellement, un hétéroatome, l'un au moins des symboles Z correspondant à un groupement fonctionnel de réticulation.
  
    les POS A tout spécialement envisagés dans le cadre de l'invention sont des époxysilicones de formules (**A.I**) (**A.II**) suivantes :

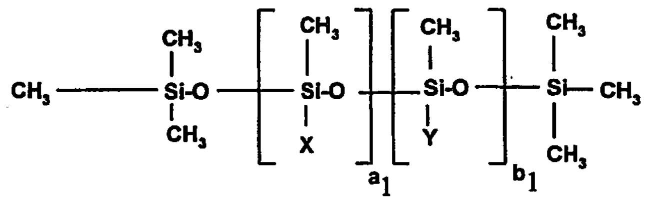

**(A.I)**

avec

- X = $CH_3$ ; Phényle ; Cycloalkyle ; alkyle $C_1$-$C_{18}$ ; alcényle ;
  -OH; H ; $CH_2$-$CH_2$-$CH_2$-OH ; $CH_2$-$CH_2$-$CF_3$ ; - $(CH_2)_n$-$CF_3$, n = 1 à 20 ;
- et Y =

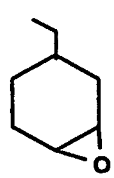 ou 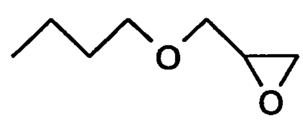

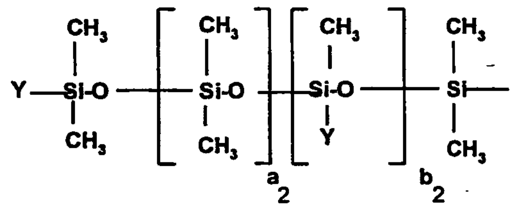

(A.II)

- $a_1$, $a_2$ et $b_1$, $b_2$ étant définis comme suit dans ces formules (**A.I**) et (**A.II**)

| | | |
|---|---|---|
| | $1 \leq a_1, a_2$ | $1 \leq b_1, b_2$ |
| de préférence | $1 \leq a_1, a_2 \leq 5\,000$ | $1 \leq b_1, b_2 \leq 500$ |
| et plus préférentiellement encore | $1 \leq a_1, a_2 \leq 1\,000$ | $1 \leq b_1, b_2 \leq 100$ ; |

- $a_2$, $b_2$ étant = 0 dans la formule (**A.II**) pour donner le disiloxane époxydé (**A.III**).

Suivant une caractéristique préférée de l'invention, les amorceurs C sont e.g. : des sels de triarylsulfonium (par exemple: $[Aryle]_3S^+$, $PF_6$ tel que celui commercialisé par la société CIBA GEIGY sous la dénomination Cyracure® PI UV 6990), ou bien les borates d'onium décrits dans la demande de brevet européen N°0 562 922, dont le contenu intégral est inclus par référence dans la présente demande. Plus précisément encore, on peut mettre en oeuvre en pratique l'amorceur de formule suivante :

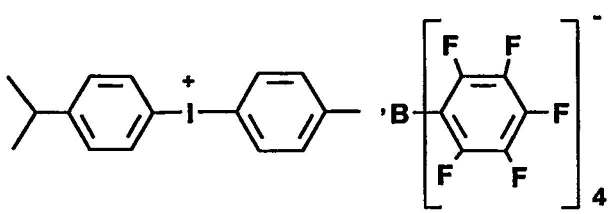

En pratique, les amorceurs de l'utilisation suivant l'invention sont préparés de manière très simple par dissolution du borate d'onium ou de complexe organométallique, de préférence d'onium, se présentant sous forme solide (poudre) dans un solvant. Selon une alternative concernant le borate d'onium, ce dernier peut être préparé directement dans le solvant, à partir d'un sel (e.g. chlorure) du cation (iodonium) et d'un sel (par exemple de potassium) de l'anion borate.

De préférence, il est prévu conformément à l'utilisation selon l'invention que l'amorceur (PA) est employé en solution dans un solvant organique, de préférence choisi parmi les solvants donneurs de protons et plus préférentiellement encore parmi le groupe suivant : alcool isopropylique, alcool benzylique, diacétone-alcool, lactate de butyle, esters, et leurs mélanges. Comme cela est revendiqué dans le brevet français N° 2 724 660, les solvants organiques donneurs de protons et à caractère aormatique (alcool benzylique), se comportent comme des accélérateurs de réticulation. Il est donc avantageux de s'en servir pour mettre en solution, le photoamorceur.

Il convient de préciser que par quantité catalytique efficace de PA, on entend, au sens de l'invention, la quantité suffisante pour amorcer la réticulation.

Dans la mesure où en pratique, - comme indiqué supra -, le photoamorceur ou photoinitiateur est avantageusement dissous dans un solvant polaire, en quantité telle que son titre à la solution obtenue soit compris entre 1 et 50 % en poids, de préférence entre 10 et 30 % en poids, et plus préférentiellement encore entre 15 et 25 % en poids.

Selon une modalité avantageuse de l'utilisation selon l'invention, l'incorporation du PA en solution dans la phase silicone huileuse φs se fait à raison de 0,1 à 10 % en poids de solution par rapport au mélange final, de préférence 0,5 à 5 % en poids et plus préférentiellement de l'ordre de 1 % en poids.

En pratique, le photoamorceur est ainsi souvent présent dans cette phase silicone huileuse φs, avant la mise en émulsion. Ce photoamorceur peut éventuellement jouer le rôle de co-tensioactif.

Conformément à un deuxième mode de mise en oeuvre correspondant à un mode de réticulation des silicones par polyaddition, on choisit les produits suivants à titre de constituants de la phase silicone :

- POS (**A'**) : produit présentant des motifs de formule :

$$W_aZ_bSiO_{\frac{4-(a+b)}{2}} \qquad (A'.1)$$

dans laquelle :

- W est un groupe alcényle, de préférence vinyle ou alkyle,
- Z est un groupe hydrocarboné monovalent, exempt d'action défavorable sur l'activité du catalyseur et choisi, de préférence, parmi les groupes alkyles ayant de 1 à 8 atomes de carbone inclus, avantageusement, parmi les groupes méthyle, éthyle, propyle et 3,3,3-trifluoropropyle et ainsi que parmi les groupes aryle et, avantageusement, parmi les radicaux xylyle et tolyle et phényle,
- a est 1 ou 2, b est 0, 1 ou 2 et a + b est compris entre 1 et 3,

éventuellement au moins une partie des autres motifs sont des motifs de formule moyenne :

$$Z_c SiO_{\frac{4-c}{2}} \qquad (A'.2)$$

dans laquelle Z a la même signification que ci-dessus et c a une valeur comprise entre 0 et 3, par exemple entre 1 et 3; les diméthylpolysiloxanes à extrémités diméthylvinylsilyle, les copolymères méthylvinyldiméthylpolysiloxanes à extrémités triméthylsilyle, les copolymères méthylvinyldiméthyl-polysiloxanes à extrémités diméthylvinylsilyle, les méthyl-vinylpolysiloxanes cycliques, étant plus spécialement sélectionnés;

- POS (**B'**) : produit présentant des motifs siloxyle de formule :

$$H_d L_c SiO_{\frac{4-(d+c)}{2}} \qquad (B'.1)$$

dans laquelle :

- L est un groupe hydrocarboné monovalent, exempt d'action défavorable sur l'activité du catalyseur e choisi, de préférence, parmi les groupes alkyles ayant de 1 à 8 atomes de carbone inclus et, avantageusement, parmi les groupes méthyle, éthyle, propyle et 3,3,3-trifluoropropyle et ainsi que parmi les groupes aryles et, avantageusement, parmi les radicaux xylyle et tolyle et phényle,
- d est 1 ou 2, c est 0, 1 ou 2, d + c a une valeur comprise entre 1 et 3,
- éventuellement, au moins une partie des autres motifs étant des motifs de formule moyenne :

$$L_g SiO_{\frac{4-g}{2}} \qquad (B'.2)$$

dans laquelle L a la même signification que ci-dessus et g a une valeur comprise entre 0 et 3, et le poly(diméthylsiloxane) (méthylhydrogénosiloxy) ($\alpha$,$\omega$-diméthylhydrogéno)-siloxane, étant plus spécialement sélectionnés.

Ces POS réticulables par polyaddition peuvent être du type de ceux qui réticulent à température ambiante ou à la chaleur par des réactions de polyaddition en présence d'un catalyseur métallique en l'occurrence à base de platine. Ce sont des compositions POS réticulables appelées RTV ("Room Temperature Vulcanising") ou Elastomères Vulcanisables à Froid (EVF).

Mais il peut être souhaitable au niveau industriel d'accélérer la réticulation en augmentant la température de la couche silicone déposée sur le support souple (par exemple 100-150°C) / four tunnel dans un dispositif industriel

fonctionnant en continu. Cela concerne les compositions POS polyaddition dénommées EVC qui est l'abréviation de "élastomère vulcanisable à chaud".

Les compositions POS bicomposantes ou monocomposantes RTV ou EVC de polyaddition, essentiellement par réaction de groupements hydrogénosylylés sur des groupements alkényl sylylés, en présence généralement d'un catalyseur métallique (de préférence au platine), sont décrites par exemple dans les brevets US-3 220 972, 3 284 406, 3 436 366, 3 697 473 et 4 340 709.

Selon un troisième mode de mise en oeuvre, la phase silicone peut réticuler par polycondensation de groupements OH et/ou de groupements hydrolysables, en présence d'un catalyseur à l'étain. Cela vise des compositions POS bicomposantes ou monocomposantes réticulant à température ambiante par des réactions de polycondensation sous l'action de l'humidité, en présence généralement d'un catalyseur métallique, par exemple un composé de l'étain (RTV polycondensation).

Les POS entrant dans ces compositions RTV polycondensation sont des polysiloxanes linéaires ramifiés ou réticulés porteurs de groupements hydroxyle ou de groupements hydrolysables par exemple alcoxy. De pareilles compositions peuvent contenir en outre un agent de réticulation, qui est, notamment, un cylindre portant au moins 3 groupements hydrolysables comme par exemple un silicate, un alkyltrialcoxysilane ou un aminoalkyle trialcoxysilane.

Ces compositions sont décrites par exemple dans les brevets US-3 065 194, 3 542 901, 3 779 986, 4 417 042 et dans le brevet FR-2 638 752 (compositions monocomposantes) et dans les brevets US-3 678 002, 3 888 815, 3 933 729 et 4 064 096 (compositions bicomposantes).

Outre ces POS, la composition silicone liquide d'enduction peut également contenir :

-D- au moins un promoteur d'adhérence (D);

-E- et/ou au moins additif (E) courant dans les compositions silicone réticulant par voie cationique ou par voie radicalaire, par polyaddition ou par polycondensation.

S'agissant des additifs (E), on peut citer :

- pour les POS réticulables par voie cationique et/ou radicalaire par activation sous rayonnements ou faisceaux d'électrons :
  - les diluants époxyéther,
  - les pigments du type noir de carbone, dioxyde de titane, phtalocyanine, benzimidazolone ;les naphtols (BONA pigment lakes) ; diazopyrazolones ; pigments jaunes diarylides ou monoarylides ...benzimidazolone, naphtone, diazopyrazolone...,
  - les photosensibilisateurs choisis parmi les produits (poly(aromatiques) -éventuellement métalliques- et les produits hétérocycliques (phénotiazine, tétracène, périlène, anthracène, xantopinacole, thioxantone...),
  - des inhibiteurs de réticulation, de préférence choisis parmi les produits alcalins, et plus préférentiellement encore parmi les produits alcalins de type aminé, par exemple du type de ceux consistant en un silicone sur lequel est greffé au moins un groupement amine, de préférence tertiaire ;

- pour les compositions RTV POS polyaddition :

  les ralentisseurs de la réaction d'addition (e.g. tétraméthylvinyltétrasiloxane, pyridine, phosphines, phosphites, amides insaturés et alcools acétyléniques ;

- pour les compositions POS RTV ou EVC polycondensation :

  les agents réticulants tels que les alkyltrialcoxysilane les silicates d'alkyle, les polysilicates d'alkyle (silicate de méthyle, d'éthyle, silicate d'isopropyle, silicate de n-propyle...) ;

- et de manière générale pour tous les POS :
  - les pigments,
  - les $\alpha$-oléfines,
  - Les charges et en particulier les charges siliciques peuvent être par exemple des silices de combustion traitées à l'hexaméthyldisilasanes ou à l'octaméthylcyclotétrasiloxanes (surface spécifique 300 $m^2/g$), silice fumée. Ces charges peuvent être minérales ou non, e.g. : fibre synthétique ou naturelle (polymères) broyés, carbonate de calcium, talc, argile, dioxyde de titane...

S'agissant des caractéristiques méthodologiques, on applique sur le support une quantité d'émulsion silicone inverse telle que l'épaisseur du film formant le revêtement est inférieure ou égale à 500 μm, de préférence comprise entre 150 et 300 μm.

Selon un autre de ces aspects, l'invention concerne l'utilisation d'une émulsion silicone inverse eau-dans-huile, comportant :

- une phase continue huileuse silicone φs:
  - ○ réticulable en élastomère
  - ○ et comprenant :
    - → -A- au moins un polyorganosiloxane (POS) réticulable par polyaddition, par polycondensation, par voie cationique ou par voie radicalaire ;
    - → -B- éventuellement au moins un composé organosilicique réticulant ;
    - → -C- éventuellement au moins un catalyseur de la réaction de réticulation ;
- une phase aqueuse φa, comprenant au moins 20% poids d'eau,
- au moins un stabilisant,

pour la réalisation de revêtements imperméables à l'eau et perméables à la vapeur d'eau, sur supports souples.

Est également protégée par l'invention, toute émulsion silicone inverse eau-dans-huile filmogène, pour la réalisation de revêtements imperméables à l'eau et perméables à la vapeur d'eau, sur supports souples, caractérisée en ce qu'elle comporte :

- une phase continue huileuse silicone φs:
  - ○ réticulable en élastomère
  - ○ et comprenant :
    - → -A- au moins un polyorganosiloxane (POS) réticulable par polyaddition, par polycondensation, par voie cationique ou par voie radicalaire ;
    - → -B- éventuellement au moins un composé organosilicique réticulant ;
    - → -C- éventuellement au moins un catalyseur de la réaction de réticulation ;
- une phase aqueuse φa comprenant au moins 20 % en poids d'eau,
- au moins un stabilisant,
- au moins un additif promoteur d'adhésion du revêtement sur le support et/ou d'amélioration des propriétés d'imperméabilité à l'eau et de perméabilité à la vapeur d'eau,
- et/ou au moins un additif permettant d'optimiser les propriétés mécaniques du revêtement. Les émulsions eau-dans-huile selon l'invention ne comprennent pas les émulsions eau-dans-huile silicone obtenues à partir d'élastomères silicones en solution dans des solvants organiques.
  Enfin un autre objet de l'invention est constitué par un support souple, de préférence textile, et plus préférentiellement encore textile synthétique, caractérisé en ce qu'il est revêtu sur au moins l'une de ses faces d'un revêtement imperméables à l'eau et perméables à la vapeur d'eau, obtenu par mise en oeuvre du procédé tel que défini ci-dessus ou selon l'utilisation tel que définie ci-dessus, ou bien encore à l'aide de l'émulsion tel que définie ci-dessus.

## DESCRIPTION DES FIGURES

Les Figures 1 & 2 annexées sont des graphes donnant la perméabilité P en g/m$^2$ en 24 heures d'un tissu enduit avec l'émulsion inverse eau-dans-huile, en fonction de la teneur en eau en % de l'émulsion.

## EXEMPLES

Le support utilisé dans ces essais est en polyamide (110 decitex). Les méthodes d'enduction sont bien connues de l'homme de l'art.

**Exemples 1 & 2** :

Intérêt de l'enduction à base de l'émulsion inverse d'huile silicone par rapport à l'enduction d'huile silicone seule.

**TABLEAU 1**

| Exemple | Type enduit | Nature huile | % huile | % eau | Nature stabilisation |
|---|---|---|---|---|---|
| 1 | Huile | A.I avec $a_1$= 70-80 $b_1$= 7-8 et η= 350 mPa.s | 100 | 0 | - |
| 2 | Emulsion inverse | A.I avec $a_1$= 70-80 $b_1$= 7-8 et η=350 mPa.s | 60 | 40 | Silice |

A l'échelle du laboratoire, l'huile est introduite dans un réacteur de type IKA équipé d'une pale raclante et d'une contre pale. La silice est introduite dans l'huile sous agitation (80-100 trs/mn). Après dispersion complète de la silice dans l'huile, l'eau est introduite lentement et l'agitation est maintenue jusqu'à complète incorporation de l'eau. A l'arrêt de l'agitation, aucune goutte d'eau ne doit être visible en surface. La stabilisation est assurée par une silice précipitée hydrophobe (par ex. Sipernat® D10 de Degussa).
Le photoamorceur est présent dans l'huile avant la mise en émulsion, à raison de 0,5% en poids, et associe 0,5% en poids d'un co-solvant constitué par le l'isopropanol. Le photoamorceur utilisé est celui de formule suivante :

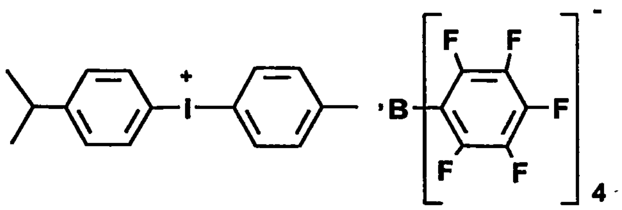

Evaluation de la perméabilité :

En salle conditionnée ou étuve MPC à 25°C et 50% d'humidité relative, le support enduit est positionné de manière étanche sur une coupelle en aluminium contenant 150 ml d'eau, une goutte de bactéricide et un morceau d'éponge qui permet d'éviter tout contact entre la membrane et l'eau. La coupelle doit être placée pendant 48h dans la salle conditionnée ou l'étuve avant le début des mesures. Après la mise en équilibre, la coupelle est pesée régulièrement toutes les 24 heures.
La courbe de la perte de masse en fonction du temps est tracée. On doit prendre en compte cette courbe lorsqu'elle devient linéaire. La perméabilité P peut ensuite être calculée de la manière suivante:

$$P = \text{pente} / \pi r^2 \quad \text{exprimée en } g/m^2/24\ h.$$

Avec:

- pente en g/24h
- r = 0,05m : rayon de la surface d'échange à travers la membrane

Les résultats obtenus sont les suivants:

**TABLEAU 2**

| Exemple | Description | Perméabilité g/m$^2$ en 24h |
|---|---|---|
| 1 | Support + A.I avec $a_1$=70-80, $b_1$=7-8 et η=350 mPa.s | 63 |
| 2 | Support + Emulsion inverse A.I avec $a_1$=70-80, $b_1$=7-8 et η=350 mPa.s | 402 |

- L'émulsion inverse d'huile silicone réticulable permet de multiplier par 6.4 la perméabilité à la vapeur d'eau d'une huile silicone.

**Exemples 3 à 7 :**

Influence de la teneur en eau de l'émulsion inverse :
D'autre part, ce test a été mis en oeuvre pour comparer la perméabilité apportée par des émulsions contenant différents taux d'eau: 20%, 30%, 45% et 60%. Les émulsions sont stabilisées avec 8% silice par rapport à l'eau.
Les perméabilités ainsi obtenues sont les suivantes:

**TABLEAU 3**

| Exemple | 3 | 4 | 5 | 6 | 7 |
|---|---|---|---|---|---|
| % eau/eau+huile | 0 | 20 | 30 | 45 | 60 |
| P g/m2 en 24 h | 63 | 72 | 79 | 165 | 402 |

- On constate donc que plus la quantité d'eau est grande dans l'émulsion, plus la perméabilité à la vapeur d'eau est importante (voir Fig.1 annexée)

**Exemples 8 à 10 :**

La perméabilité à la vapeur d'eau a été également évaluée à 38°C et 50% HR.
Les émulsions inverses utilisées pour l'enduction contiennent de 20 à 60% d'eau.
Les résultats sont les suivants :

**TABLEAU 4**

| Exemple | 8 | 9 | 10 |
|---|---|---|---|
| % eau/eau+huile | 20 | 40 | 60 |
| P g/m2 en 24 h | 195 | 699 | 2292 |

Ces résultats sont reportés sur la Fig.2 annexée.

- Sachant qu'en l'absence de revêtement, le support seul conduit à une perméabilité de 3076 g/m$^2$ en 24 h, l'émulsion inverse à 60% d'eau permet donc de recouvrir 75% de la perméabilité du support.

**Exemples 11 à 14 :**

La perméabilité à la vapeur d'eau (23°C 50%HR) a été également testée sur des tissus vestimentaires contenant du coton et du polyester à partir d'une émulsion inverse à 60% d'eau stabilisée par 8% de silice/eau.
Globalement les résultats sont les suivants :

**TABLEAU 5**

| Exemples | Type support | Perméabilité support seul (1) | Perméabilité support +Emulsion inverse (2) | Ratio (1)/(2) |
|---|---|---|---|---|
| 11 | Polyester | 1769 | 705 | 40% |
| 12 | Polyamide | 2026 | 810 | 40% |
| 13 | Polyester - coton 67/33 | 1120 | 834 | 74% |
| 14 | Coton | 1497 | 1000 | 67% |

- Suivant le support textile utilisé pour l'enduction, on peut recouvrir jusqu'à 74% de sa perméabilité en utilisant une émulsion inverse.

L'ensemble de ces résultats montre que :

- l'utilisation d'une émulsion inverse d'huile silicone réactive permet d'augmenter la perméabilité à la vapeur d'eau de l'huile,
- d'obtenir des revêtements imper-respirants,
- la perméabilité croit avec la teneur en eau de l'émulsion inverse.

## Revendications

**1.** Procédé de réalisation de revêtements imperméable à l'eau et perméable à la vapeur d'eau, sur supports souples **caractérisé en ce qu'**il consiste essentiellement :

♦ à appliquer sur au moins l'une des faces du support, de façon à former un film, une émulsion silicone inverse eau-dans-huile, comportant :

• une phase continue huileuse silicone φs:

○ réticulable en élastomère
○ et comprenant :

→ -A- au moins un polyorganosiloxane (POS) réticulable par polyaddition, par polycondensation, par voie cationique ou par voie radicalaire ;
→ -B- éventuellement au moins un composé organosilicique réticulant ;
→ -C- éventuellement au moins un catalyseur de la réaction de réticulation;

• une phase aqueuse φa comprenant au moins 20% poids d'eau,
• au moins un stabilisant,

♦ à faire en sorte que la phase silicone φs réticule et qu'intervienne une élimination d'eau.

**2.** Procédé selon la revendication 1, **caractérisé en ce que** la phase silicone φs possède une viscosité η à 25°C inférieure à 2000 mPa.s, de préférence comprise entre 100 et 1400 mPa.s, et plus préférentiellement encore comprise entre 100 et 800 mPa.s.

**3.** Procédé selon la revendication 1, **caractérisé en ce que** la phase aqueuse φa comprend de 30 à 90% poids d'eau, et plus préférentiellement encore de 40 à 80% poids d'eau.

**4.** Procédé selon la revendication 1 **caractérisé en ce que** la phase continue huileuse la phase aqueuse φa présente une granulométrie définie par son diamètre moyen D50 (en μm) telle que:

$$D50 \leq 100$$

(suite)

de préférence 0,001 ≤ D50 ≤ 50.

**5.** Procédé selon la revendication 1, **caractérisé en ce que** l'on applique sur le support une quantité d'émulsion silicone inverse telle que l'épaisseur du film formant le revêtement est inférieure ou égale à 500 μm, de préférence comprise entre 150 et 300 μm.

**6.** Procédé selon la revendication 1, **caractérisé en ce que** le stabilisant est choisi dans le groupe comprenant :

- les tensioactifs non-ioniques, anioniques, cationiques, ou même zwitterioniques;
- les silicones polyéthers;
- les particules solides, de préférence des particules de silice éventuellement en combinaison avec au moins un co-stabilisant, préférablement sélectionnés parmi les tensioactifs non-ioniques, anioniques, cationiques ou même zwitterioniques;
- et leurs mélanges.

**7.** Procédé selon la revendication 1, **caractérisé en ce que** la phase continue huileuse silicone φs comprend :

-A- au moins un POS porteur de groupements fonctionnels de réticulation, ces derniers étant de préférence choisis parmi les groupements comprenant au moins une fonction éthyléniquement insaturée - avantageusement acrylate et/ou alcényléther - et/ou époxyde et/ou oxéthane;
-B- éventuellement au moins un silane et/ou un POS porteur de groupements fonctionnels de même nature ou non que les groupements fonctionnels de réticulation du POS A;
-C- au moins un système photoamorceur de préférence choisi parmi les sels d'onium d'un élément des groupes 15 à 17 de la classification périodique ou d'un complexe organométallique d'un élément des groupes 4 à 10 de la classification périodique;

les groupements fonctionnels de réticulation étant de préférence choisis parmi les groupements comprenant au moins une fonction éthyléniquement insaturée - avantageusement acrylate et/ou alcényléther - et/ou époxyde et/ou oxéthanne.

**8.** Procédé selon la revendication 7, **caractérisé en ce que** les POS A sont des époxysilicones et/ou des vinyléthersilicones qui sont :

→ soit linéaires ou sensiblement linéaires et constitués de motifs de formule (**I**), terminés par des motifs de formule (**II**.1) et (II.2),
→ soit cycliques et constitués par des motifs de formule (II.1) :

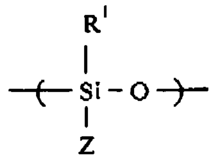 (II.1) 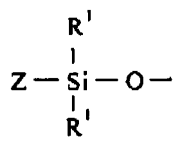 (II.2)

formules dans lesquelles :

• les symboles $R^1$ sont semblables ou différents et représentent :

- soit un radical alkyle linéaire ou ramifié en $C_1$-$C_6$, éventuellement substitué, avantageusement par un ou des halogènes, les radicaux alkyles éventuellement substitués préférés étant : méthyle, éthyle, propyle, octyle et 3,3,3 trifluoropropyle,
- soit un radical cycloalkyle en $C_5$-$C_8$, éventuellement substitué,
- soit un radical aryle ou aralkyle, éventuellement substitué :

. notamment par des halogènes et/ou des alcoxyles,

. les radicaux phényle, xylyle, tolyle et dichlorophényle étant tout particulièrement sélectionnés,

- et, plus préférentiellement encore, au moins 60 % molaire des radicaux $R^3$ étant des méthyles,

• les symboles Z sont semblables ou différents et représentent :

- soit le radical $R^1$,
- soit un groupement fonctionnel de réticulation correspondant à un reste époxyde ou vinyléther relié au silicium par l'intermédiaire d'un radical divalent contenant, avantageusement, de 2 à 20 atomes de carbone comportant, éventuellement, un hétéroatome, l'un au moins des symboles Z correspondant à un groupement fonctionnel de réticulation.

les POS A tout spécialement envisagés étant des époxysilicones de formules (**A.I**) (**A.II**) suivantes :

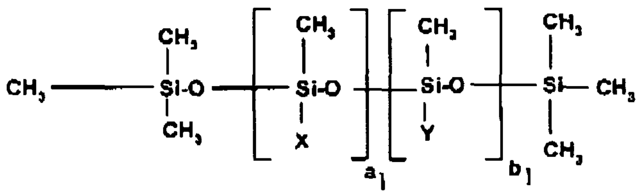

(**A.I**)

avec

• X = $CH_3$ ; Phényle ; Cycloalkyle ; alkyle $C_1$-$C_{18}$; alcényle ;
-OH; H ; $CH_2$-$CH_2$-$CH_2$-OH ; $CH_2$-$CH_2$-$CF_3$ ; - $(CH_2)_n$-$CF_3$, n = 1 à 20 ;
• et Y =

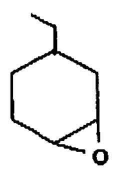

ou

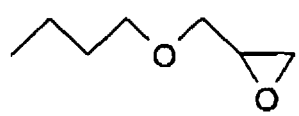

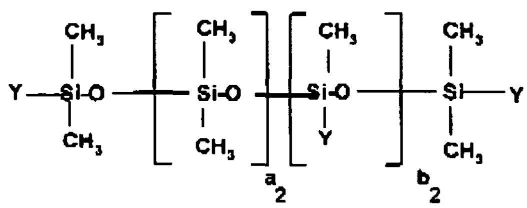

(**A.II**)

- $a_1$, $a_2$ et $b_1$, $b_2$ étant définis comme suit dans ces formules (**A.I**) et (**A.II**)

| | | |
|---|---|---|
| | $1 \leq a_1, a_2$ | $1 \leq b_1, b_2$ |
| de préférence | $1 \leq a_1, a_2 \leq 5\,000$ | $1 \leq b_1, b_2 \leq 500$ |
| et plus préférentiellement encore | $1 \leq a_1, a_2 \leq 1\,000$ | $1 \leq b_1, b_2 \leq 100$ ; |

- $a_2$, $b_2$ étant = 0 dans la formule (**A.II**) pour donner le disiloxane époxydé (**A.III**).

**9.** Procédé selon la revendication 1, **caractérisé en ce que** l'on choisit les produits suivants à titre de constituants

de la phase silicone :

- POS (**A'**) : produit présentant des motifs de formule :

$$W_a Z_b SiO_{\frac{4-(a+b)}{2}} \qquad \textbf{(A'.1)}$$

dans laquelle :

- W est un groupe alcényle, de préférence vinyle ou alkyle,
- Z est un groupe hydrocarboné monovalent, exempt d'action défavorable sur l'activité du catalyseur et choisi, de préférence, parmi les groupes alkyles ayant de 1 à 8 atomes de carbone inclus, avantageusement, parmi les groupes méthyle, éthyle, propyle et 3,3,3-trifluoropropyle et ainsi que parmi les groupes aryle et, avantageusement, parmi les radicaux xylyle et tolyle et phényle,
- a est 1 ou 2, b est 0, 1 ou 2 et a + b est compris entre 1 et 3,

éventuellement au moins une partie des autres motifs sont des motifs de formule moyenne :

$$Z_c SiO_{\frac{4-c}{2}} \qquad \textbf{(A'.2)}$$

dans laquelle Z a la même signification que ci-dessus et c a une valeur comprise entre 0 et 3, par exemple entre 1 et 3; les diméthylpolysiloxanes à extrémités diméthylvinylsilyle, les copolymères méthylvinyldiméthyl-polysiloxanes à extrémités triméthylsilyle, les copolymères méthylvinyldiméthyl-polysiloxanes à extrémités diméthylvinylsilyle, les méthyl-vinylpolysiloxanes cycliques, étant plus spécialement sélectionnés;
- POS (**B'**) : produit présentant des motifs siloxyle de formule :

$$H_d L_c SiO_{\frac{4-(d+c)}{2}} \qquad \textbf{(B'.1)}$$

dans laquelle :

- L est un groupe hydrocarboné monovalent, exempt d'action défavorable sur l'activité du catalyseur e choisi, de préférence, parmi les groupes alkyles ayant de 1 à 8 atomes de carbone inclus et, avantageusement, parmi les groupes méthyle, éthyle, propyle et 3,3,3-trifluoropropyle et ainsi que parmi les groupes aryles et, avantageusement, parmi les radicaux xylyle et tolyle et phényle,
- d est 1 ou 2, c est 0, 1 ou 2, d + c a une valeur comprise entre 1 et 3,
- éventuellement, au moins une partie des autres motifs étant des motifs de formule moyenne :

$$L_g SiO_{\frac{4-g}{2}} \qquad \textbf{(B'.2)}$$

dans laquelle L a la même signification que ci-dessus et g a une valeur comprise entre 0 et 3, et le poly(diméthylsiloxane) (méthylhydrogénosiloxy) ($\alpha$,$\omega$-diméthylhydrogéno)-siloxane, étant plus spécialement sélectionnés.

**10.** Utilisation d'une une émulsion silicone inverse eau-dans-huile, comportant :

• une phase continue huileuse silicone $\varphi$s:

○ réticulable en élastomère
○ et comprenant :

→ -A- au moins un polyorganosiloxane (POS) réticulable par polyaddition, par polycondensation, par voie cationique ou par voie radicalaire ;
→ -B- éventuellement au moins un composé organosilicique réticulant ;
→ -C- éventuellement au moins un catalyseur de la réaction de réticulation;

• une phase aqueuse φa, comprenant au moins 20% poids d'eau,
• au moins un stabilisant,

pour la réalisation de revêtements imperméables à l'eau et perméables à la vapeur d'eau, sur supports souples.

**11.** Emulsion silicone inverse eau-dans-huile filmogène, pour la réalisation de revêtements imperméables à l'eau et perméables à la vapeur d'eau, sur supports souples, **caractérisée en ce qu'**elle comporte :

• une phase continue huileuse silicone φs:

○ réticulable en élastomère
○ et comprenant :

→ -A- au moins un polyorganosiloxane (POS) réticulable par polyaddition, par polycondensation, par voie cationique ou par voie radicalaire ;
→ -B- éventuellement au moins un composé organosilicique réticulant ;
→ -C- éventuellement au moins un catalyseur de la réaction de réticulation;

• une phase aqueuse φa comprenant au moins 20% poids d'eau,
• au moins un stabilisant,
• au moins un additif promoteur d'adhésion du revêtement sur le support et/ou d'amélioration des propriétés d'imperméabilité à l'eau et de perméabilité à la vapeur d'eau,
• et/ou au moins un additif permettant d'optimiser les propriétés mécaniques du revêtement.

**12.** Support souple, de préférence textile, et plus préférentiellement encore textile synthétique, **caractérisé en ce qu'**il est revêtu sur au moins l'une de ses faces d'un revêtement imperméables à l'eau et perméables à la vapeur d'eau, obtenu par mise en oeuvre du procédé selon l'une quelconque des revendications 1 à 9 ou selon l'utilisation de la revendication 10, ou bien encore à l'aide de l'émulsion selon la revendication 11.

## Claims

**1.** Process for producing coatings that are waterproof and permeable to moisture vapour, on pliable supports, **characterized in that** it consists essentially:

♦ in applying to at least one of the faces of the support, so as to form a film, a silicone-based water-in-oil inverse emulsion comprising:

• a continuous oily silicone phase φs:

○ which can be crosslinked into an elastomer
○ and which comprises:

→ -A- at least one polyorganosiloxane (POS) that is crosslinkable by polyaddition, by polycondensation, by cationic means or by free-radical means;
→ -B- optionally at least one crosslinking organosilicic compound;
→ -C- optionally at least one catalyst for the crosslinking reaction;

• an aqueous phase φa comprising at least 20% by weight of water,
• at least one stabilizer,

♦ in seeing to it that the silicone phase φs crosslinks and that removal of water occurs.

**2.** Process according to Claim 1, **characterized in that** the silicone phase φs has a viscosity η at 25°C of less than 2000 mPa.s, preferably of between 100 and 1400 mPa.s, and even more preferably of between 100 and 800 mPa.s.

**3.** Process according to Claim 1, **characterized in that** the aqueous phase φa comprises from 30 to 90% by weight of water, and even more preferably from 40 to 80% by weight of water.

**4.** Process according to Claim 1, **characterized in that** the continuous oily phase the aqueous phase φa has a mean particle size defined by its mean diameter D50 (in μm) such that:

$$D50 \leq 100$$

preferably $0.001 \leq D50 \leq 50.$

**5.** Process according to Claim 1, **characterized in that** an amount of inverse silicone emulsion such that the thickness of the film forming the coating is less than or equal to 500 μm, preferably between 150 and 300 μm, is applied to the support.

**6.** Process according to Claim 1, **characterized in that** the stabilizer is chosen from the group comprising:

- non-ionic, anionic, cationic, or even zwitterionic surfactants;
- silicone polyethers;
- solid particles, preferably particles of silica optionally in combination with at least one costabilizer, preferably selected from non-anionic, anionic, cationic, or even zwitterionic surfactants;
- and mixtures thereof.

**7.** Process according to Claim 1, **characterized in that** the continuous oily silicone phase φs comprises:

-A- at least one POS carrying crosslinking functional groups, the latter being preferably chosen from groups comprising at least one ethylenically unsaturated function- advantageously acrylate and/or alkenyl ether - and/or epoxide and/or oxethane;
-B- optionally at least one silane and/or one POS carrying functional groups which may or may not be of the same nature as the crosslinking functional groups of POS A;
-C- at least one photoinitiator system, preferably chosen from the onium salts of an element of groups 15 to 17 of the Periodic Table or of an organometallic complex of an element of groups 4 to 10 of the Periodic Table;

the crosslinking functional groups being preferably chosen from groups comprising at least one ethylenically unsaturated function - advantageously acrylate and/or alkenyl ether - and/or epoxide and/or oxethane.

**8.** Process according to Claim 7, **characterized in that** the POSs A are epoxysilicones and/or vinyl ether silicones which are:

→ either linear or substantially linear and consist of units of formula (**I**), ending with units of formula (II.1) and (II.2),
→ or cyclic and consist of units of formula (II.1):

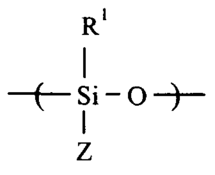 (II.1) 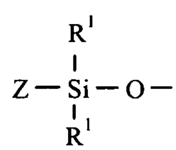 (II.2)

in which formulae:

• the symbols $R^1$ are similar or different and represent:

- either a linear or branched $C_1$-$C_6$ alkyl radical optionally substituted advantageously with one or more

halogens, the preferred optionally substituted alkyl radicals being: methyl, ethyl, propyl, octyl and 3,3,3-trifluoropropyl,
- or an optionally substituted $C_5$-$C_8$ cycloalkyl radical,
- or an aryl or aralkyl radical optionally substituted:

. in particular with halogens and/or alkoxyls,
. the phenyl, xylyl, tolyl and dichlorophenyl radicals being particularly selected,

- and, even more preferably, at least 60 mol% of the radicals $R^3$ being methyls,

• the symbols Z are similar or different and represent:

- either the radical $R^1$,
- or a crosslinking functional group corresponding to an epoxide or vinyl ether residue linked to the silicon by means of a divalent radical advantageously containing from 2 to 20 carbon atoms optionally comprising a hetero atom, at least one of the symbols Z corresponding to a crosslinking functional group,

the POSs A most specially envisaged being epoxysilicones of formulae (**A.I**) and (**A.II**) below:

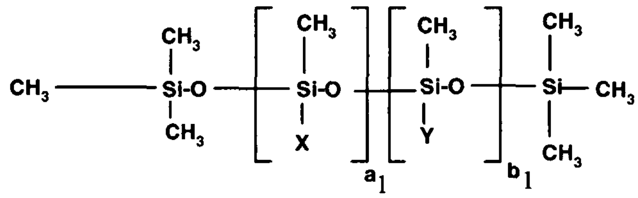

(**A.I**)

with

X = $CH_3$; phenyl; cycloalkyl; alkyl; $C_1$-$C_{18}$ alkyl; alkenyl;
-OH; H; $CH_2$-$CH_2$-$CH_2$-OH; $CH_2$-$CH_2$-$CF_3$; $-(CH_2)_n-CF_3$ , n = 1 to 20 ;
• and Y =

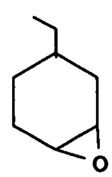

or

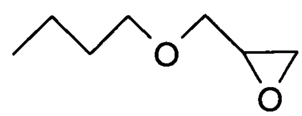

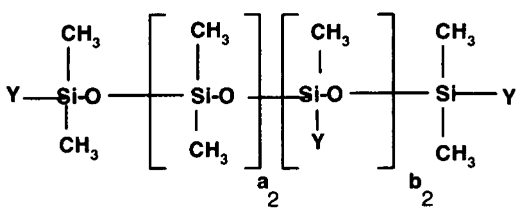

(**A.II**)

- $a_1$, $a_2$ and $b_1$, $b_2$ being defined as follows, in these formulae (**A.I**) and (**A.II**)

$1 \leq a_1, a_2$ $1 \leq b_1, b_2$

(continued)

| | | |
|---|---|---|
| preferably | $1 \leq a_1, a_2 \leq 5000$ | $1 \leq b_1, b_2 \leq 500$ |
| and even more preferably | $1 \leq a_1, a_2 \leq 1000$ | $1 \leq b_1, b_2 \leq 100$; |

- $a_2$, $b_2$ being = 0 in formula (**A.II**) to give the epoxidized disiloxane (**A.III**).

**9.** Process according to Claim 1, **characterized in that** the following products are chosen as constituents of the silicone phase:

- POS (**A'**): product having units of formula:

$$W_a Z_b SiO_{\frac{4-(a+b)}{2}} \qquad \textbf{(A'.1)}$$

in which :

- W is an alkenyl group, preferably vinyl or alkyl,
- Z is a monovalent hydrocarbon-based group, free of unfavourable action on the activity of the catalyst and preferably chosen from alkyl groups containing from 1 to 8 carbon atoms inclusive, advantageously from the groups methyl, ethyl, propyl and 3,3,3-trifluoropropyl, and also from aryl groups and, advantageously, from the xylyl, tolyl and phenyl radicals,
- a is 1 or 2, b is 0, 1 or 2 and a + b is between 1 and 3,

optionally at least some of the other units are units of general formula:

$$Z_c\, SiO_{\frac{4-c}{2}} \qquad \textbf{(A'.2)}$$

in which Z has the same meaning as above and c has a value of between 0 and 3, for example between 1 and 3; dimethylpolysiloxanes with dimethylvinylsilyl ends, copolymers of methylvinyldimethylpolysiloxanes with trimethylsilyl ends, copolymers of methylvinyldimethylpolysiloxanes with dimethylvinylsilyl ends and cyclic methylvinylpolysiloxanes being more specially selected;

- POS (**B'**): product having siloxyl units of formula:

$$H_d\, L_c\, SiO_{\frac{4-(d+c)}{2}} \qquad \textbf{(B'.1)}$$

in which :

- L is a monovalent hydrocarbon-based group free of unfavourable action on the activity of the catalyst and preferably chosen from alkyl groups containing from 1 to 8 carbon atoms inclusive and, advantageously, from the groups methyl, ethyl, propyl and 3,3,3-trifluoropropyl, and also from aryl groups and, advantageously, from the xylyl, tolyl and phenyl radicals,
- d is 1 or 2, c is 0, 1 or 2, d + c has a value of between 1 and 3,
- optionally at least some of the other units being units of general formula:

$$L_g\, SiO_{\frac{4-g}{2}} \qquad \textbf{(B'.2)}$$

in which L has the same meaning as above and g has a value of between 0 and 3, and (methylhydrosiloxy)(α,ω-dimethylhydro)poly(dimethylsiloxane) being more specially selected.

**10.** Use of a water-in-oil inverse silicone emulsion, comprising:

• a continuous oily silicone phase φs:

○ which can be crosslinked into an elastomer
○ and which comprises:

→ -A- at least one polyorganosiloxane (POS) that is crosslinkable by polyaddition, by polycondensation, by cationic means or by free-radical means;
→ -B- optionally at least one crosslinking organosilicic compound;
→ -C- optionally at least one catalyst for the crosslinking reaction;

• an aqueous phase φa comprising at least 20% by weight of water,
• at least one stabilizer,
for producing coatings that are waterproof and permeable to moisture vapour, on pliable supports.

**11.** Film-forming water-in-oil inverse silicone emulsion, for producing coatings that are waterproof and permeable to moisture vapour, on pliable supports, **characterized in that** it comprises:

• a continuous oily silicone phase φs:

○ which can be crosslinked into an elastomer
○ and which comprises:

→ -A- at least one polyorganosiloxane (POS) that is crosslinkable by polyaddition, by polycondensation, by cationic means or by free-radical means;
→ -B- optionally at least one crosslinking organosilicic compound;
→ -C- optionally at least one catalyst for the crosslinking reaction;

• an aqueous phase φa comprising at least 20% by weight of water,
• at least one stabilizer,
• at least one additive which promotes adhesion of the coating to the support and/or an improvement in the waterproof and moisture vapour-permeability properties,
• and/or at least one additive for optimizing the mechanical properties of the coating.

**12.** Pliable support, preferably textile support, and even more preferably synthetic textile support, **characterized in that** it is coated on at least one of its faces with a coating that is waterproof and permeable to moisture vapour, obtained by implementing the process according to any one of Claims 1 to 9 or according to the use of Claim 10, or else using the emulsion according to Claim 11.

**Patentansprüche**

**1.** Verfahren zur Herstellung von Überzügen, undurchlässig gegenüber Wasser und durchlässig gegenüber Wasserdampf, auf weichen Trägern, **dadurch gekennzeichnet, dass** es im wesentlichen besteht aus:

♦ Aufbringen einer inversen Silicon-Emulsion Wasser-in-Öl auf mindestens eine Seite des Trägers in der Weise, dass ein Film gebildet wird, wobei die Emulsion umfasst:

• eine dauerhafte ölige Silicon-Phase φs:

○ vernetzbar zu einem Elastomer
○ und umfassend:

→ -A- mindestens ein Polyorganosiloxan (POS), vernetzbar durch Polyaddition, durch Polykondensation, auf kationischem Wege oder auf radikalischem Wege:

→ -B- gegebenenfalls mindestens eine vernetzende Organosilicium-Verbindung;
→ -C- gegebenenfalls mindestens einen Katalysator der Reaktion der Vernetzung;

• eine wässerige Phase φa, umfassend mindestens 20 Gew.-% Wasser,
• mindestens einen Stabilisator,

♦ und dass man in der Weise vorgeht, dass die Silicon-Phase φs vernetzt und dass eine Entfernung von Wasser erfolgt.

**2.** Verfahren nach Anspruch 1, **dadurch gekennzeichnet, dass** die Silicon-Phase φs eine Viskosität η bei 25 °C von unter 2000 mPa.s, vorzugsweise zwischen einschließlich 100 und 1400 mPa.s und noch mehr bevorzugt zwischen einschließlich 100 und 800 mPa.s besitzt.

**3.** Verfahren nach Anspruch 1, **dadurch gekennzeichnet, dass** die wässerige Phase φa 30 bis 90 Gew.-% Wasser und noch mehr bevorzugt 40 bis 80 Gew.-% Wasser umfasst.

**4.** Verfahren nach Anspruch 1, **dadurch gekennzeichnet, dass** die dauerhafte ölige Phase, die wässerige Phase φa eine Granulometrie aufweist, definiert durch ihren mittleren Durchmesser D50 (in μm), derart:

$$D50 \leq 100 \text{ vorzugsweise } 0{,}001 \leq D50 \leq 50.$$

**5.** Verfahren nach Anspruch 1, **dadurch gekennzeichnet, dass** man auf den Träger eine solche Menge der inversen Silicon-Emulsion aufbringt, dass die Dicke des Films, der den Überzug bildet, unter oder gleich 500 μm beträgt, vorzugsweise zwischen einschließlich 150 und 300 μm.

**6.** Verfahren nach Anspruch 1, **dadurch gekennzeichnet, dass** der Stabilisator aus der Gruppe gewählt wird, die umfasst:

- die nichtionischen, anionischen, kationischen oder sogar zwitterionischen oberflächenaktiven Mittel;
- die Polyether-Silicone;
- die festen Teilchen, vorzugsweise Teilchen von Siliciumdioxid, gegebenenfalls in Kombination mit mindestens einem Co-Stabilisator, vorzugsweise ausgewählt unter den nichtionischen, anionischen, kationischen oder sogar zwitterionischen oberflächenaktiven Mittel;
- und ihren Mischungen.

**7.** Verfahren nach Anspruch 1, **dadurch gekennzeichnet, dass** die dauerhafte ölige Silicon-Phase φs umfasst:

-A- mindestens ein POS als Träger von funktionellen Gruppen der Vernetzung, wobei diese letzteren vorzugsweise ausgewählt werden unter den Gruppen, die mindestens eine ethylenisch ungesättigte Funktion umfassen, vorteilhafterweise Acrylat und/oder Alkenylether und/oder Epoxid und/oder Oxethan;
-B- gegebenenfalls mindestens ein Silan und/oder ein POS als Träger von funktionellen Gruppen der gleichen Beschaffenheit oder auch nicht wie die funktionellen Gruppen der Vernetzung des POS A;
-C- mindestens ein Photoinitiator-System, vorzugsweise ausgewählt unter den Oniumsalzen von einem Element der Gruppen 15 bis 17 des Periodensystems der Elemente oder einem organometallischen Komplex eines Elementes der Gruppen 4 bis 10 des Periodensystems der Elemente;

wobei die funktionellen Gruppen der Vernetzung vorzugsweise ausgewählt werden unter den Gruppen, die mindestens eine ethylenisch ungesättigte Funktion umfassen, vorteilhafterweise Acrylat und/oder Alkenylether und/oder Epoxid und/oder Oxethan.

**8.** Verfahren nach Anspruch 7, **dadurch gekennzeichnet, dass** die POS A Epoxysilicone und/oder Vinylethersilicone darstellen, die sind:

→ entweder linear oder etwa linear und gebildet durch Struktureinheiten der Formel (I), terminiert durch Struktureinheiten der Formel (II.1) und (II.2),
→ oder cyclisch und gebildet durch Struktureinheiten der Formel (II.1):

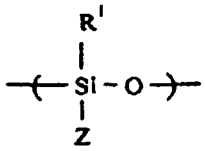 (II.1) 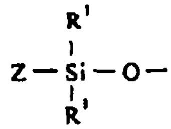 (II.2)

wobei in den Formeln :

- die Symbole $R^1$ gleich oder verschieden sind und darstellen:

  - entweder einen linearen oder verzweigten Rest Alkyl mit 1 bis 6 Kohlenstoffatomen, gegebenenfalls substituiert, vorteilhafterweise durch ein oder mehrere Halogene, wobei die gegebenenfalls substituierten, bevorzugten Reste Alkyl sind: Methyl, Ethyl, Propyl, Octyl und 3,3,3-Trifluorpropyl,
  - oder einen Rest Cycloalkyl mit 5 bis 8 Kohlenstoffatomen, gegebenenfalls substituiert,
  - oder einen Rest Aryl oder Aralkyl, gegebenenfalls substituiert:

    . insbesondere durch Halogene und/oder Alkoxyle,
    . wobei die Reste Phenyl, Xylyl, Tolyl und Dichlorphenyl ganz besonders bevorzugt sind,

  - und noch mehr bevorzugt sind mindestens 60 Mol-% der Reste $R^3$ Methylreste,

- die Symbole Z gleich oder verschieden sind und darstellen:

  - entweder den Rest $R^1$,
  - oder eine funktionelle Gruppe der Vernetzung, entsprechend einem Rest Epoxid oder Vinylether, verbunden mit dem Silicium durch das Zwischenteil eines divalenten Restes, der vorteilhafterweise 2 bis 20 Kohlenstoffatome enthält und gegebenenfalls ein Heteroatom umfasst, wobei mindestens eines der Symbole Z einer funktionellen Gruppe der Vernetzung entspricht;

die ganz besonders ins Auge gefaßten POS A sind Epoxysilicone der folgenden Formeln (A.I) und (A.II):

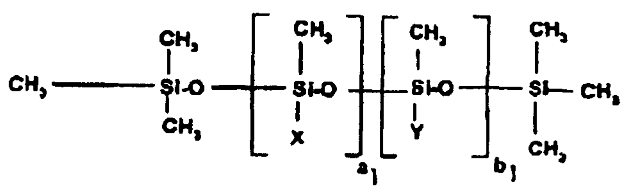

(A.I)

mit

- X = $CH_3$ ; Phenyl ; Cycloalkyl ; Alkyl mit 1 bis 18 Kohlenstoffatomen ; Alkenyl; -OH ; H ; $CH_2$- $CH_2$- $CH_2$- OH ; $CH_2$-$CH_2$-$CF_3$ ; - $(CH_2)_n$-$CF_3$, n = 1 bis 20;
- und Y =

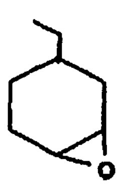

oder

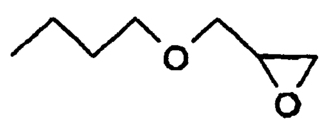

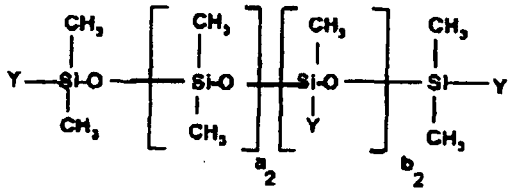

(A.II)

- $a_1$, $a_2$ und $b_1$, $b_2$ in Formeln (A.I) und (A.II) wie folgt definiert sind:

| | | |
|---|---|---|
| | $1 \leq a_1, a_2$ | $1 \leq b_1, b_2$ |
| vorzugsweise | $1 \leq a_1, a_2 \leq 5000$ | $1 \leq b_1, b_2 \leq 500$ |
| und noch mehr bevorzugt | $1 \leq a_1, a_2 \leq 1000$ | $1 \leq b_1, b_2 \leq 100$ ; |

- wobei $a_2$, $b_2$ gleich 0 sind in der Formel (A.II), um das Disiloxanepoxid (A.III) zu ergeben.

**9.** Verfahren nach Anspruch 1, **dadurch gekennzeichnet, dass** man die folgenden Produkte als Bestandteile der Silicon-Phase auswählt:

- POS (A') : Produkt, das Struktureinheiten der Formel:

$$W_aZ_bSiO_{\frac{4-(a+b)}{2}} \quad \text{(A'.1)}$$

aufweist, in der

- W eine Gruppe Alkenyl ist, vorzugsweise Vinyl oder Alkyl,
- Z eine monovalente Kohlenwasserstoff-Gruppe ist, die frei ist von einer ungünstigen Wirkung auf die Aktivität des Katalysators und vorzugsweise ausgewählt wird unter den Gruppen Alkyl mit einschließlich 1 bis 8 Kohlenstoffatomen, vorteilhafterweise unter den Gruppen Methyl, Ethyl, Propyl und 3,3,3-Trifluorpropyl, sowie unter den Gruppen Aryl und vorteilhafterweise unter den Resten Xylyl und Tolyl und Phenyl,
- a ist 1 oder 2, b ist 0, 1 oder 2 und a + b betragen zwischen einschließlich 1 und 3,

gegebenenfalls besteht mindestens ein Teil von anderen Struktureinheiten aus Struktureinheiten der mittleren Formel:

$$Z_cSiO_{\frac{4-c}{2}} \quad \text{(A'.2)}$$

in der
Z die gleiche Bedeutung hat wie oben und c einen Wert zwischen einschließlich 0 und 3 besitzt, beispielsweise zwischen 1 und 3; die Dimethylpolysiloxane mit Endgruppen Dimethylvinylsilyl, die Copolymeren Methylvinyldimethylpolysiloxane mit Endgruppen Trimethylsilyl, die Copolymeren Methylvinyldimethylpolysiloxane mit Endgruppen Dimethylvinylsilyl, die cyclischen Methylvinylpolysiloxane werden ganz speziell ausgewählt;
- POS (B') : Produkt, das Struktureinheiten Siloxyl der Formel:

$$H_dL_eSiO_{\frac{4-(d+e)}{2}} \quad \text{(B'.1)}$$

aufweist, in der

- L eine monovalente Kohlenwasserstoff-Gruppe ist, die frei ist von einer ungünstigen Wirkung auf die Aktivität des Katalysators und vorzugsweise ausgewählt wird unter den Gruppen Alkyl mit einschließlich 1 bis 8 Kohlenstoffatomen, vorteilhafterweise unter den Gruppen Methyl, Ethyl, Propyl und 3,3,3-Trifluorpropyl, sowie unter den Gruppen Aryl und vorteilhafterweise unter den Resten Xylyl und Tolyl und Phenyl,
- d ist 1 oder 2, c ist 0, 1 oder 2 und d + c besitzen einen Wert zwischen einschließlich 1 und 3,
- gegebenenfalls besteht mindestens ein Teil von anderen Struktureinheiten aus Struktureinheiten der mittleren Formel:

$$L_g SiO_{\frac{4-g}{2}} \qquad \textbf{(B'.2)}$$

in der
L die gleiche Bedeutung hat wie oben und g einen Wert zwischen einschließlich 0 und 3 besitzt; und das Poly-(dimethylsiloxan)-(methylhydrogenosiloxy)-(α,ω-dimethyl-hydrogeno)-siloxan wird ganz speziell ausgewählt.

**10.** Verwendung einer inversen Silicon-Emulsion Wasser-in-Öl, umfassend:

• eine dauerhafte ölige Silicon-Phase φs:

○ vernetzbar zu einem Elastomer
○ und umfassend:

→ -A- mindestens ein Polyorganosiloxan (POS), vernetzbar durch Polyaddition, durch Polykondensation, auf kationischem Wege oder auf radikalischem Wege:
→ -B- gegebenenfalls mindestens eine vernetzende Organosilicium-Verbindung;
→ -C- gegebenenfalls mindestens einen Katalysator der Reaktion der Vernetzung;

• eine wässerige Phase φa, umfassend mindestens 20 Gew.-% Wasser,
• mindestens einen Stabilisator, für die Herstellung von Überzügen, undurchlässig gegenüber Wasser und durchlässig gegenüber Wasserdampf, auf weichen Trägern.

**11.** Filmbildende inverse Silicon-Emulsion Wasser-in-Öl für die Herstellung von Überzügen, undurchlässig gegenüber Wasser und durchlässig gegenüber Wasserdampf, auf weichen Trägern, **dadurch gekennzeichnet, dass** sie umfasst:

• eine dauerhafte ölige Silicon-Phase φs :

○ vernetzbar zu einem Elastomer
○ und umfassend:

→ -A- mindestens ein Polyorganosiloxan (POS), vernetzbar durch Polyaddition, durch Polykondensation, auf kationischem Wege oder auf radikalischem Wege:
→ -B- gegebenenfalls mindestens eine vernetzende Organosilicium-Verbindung;
→ -C- gegebenenfalls mindestens einen Katalysator der Reaktion der Vernetzung;

• eine wässerige Phase φa, umfassend mindestens 20 Gew.-% Wasser,
• mindestens einen Stabilisator,
• mindestens einen Zusatzstoff als Promotor für die Haftung des Überzuges auf dem Träger und/oder für die Verbesserung der Eigenschaften zur Undurchlässigkeit gegenüber Wasser und zur Durchlässigkeit gegenüber Wasserdampf,
• und/oder mindestens einen Zusatzstoff, der es ermöglicht, die mechanischen Eigenschaften des Überzuges zu optimieren.

**12.** Weicher Träger, vorzugsweise textiler und noch mehr bevorzugt synthetischer textiler Träger, **dadurch gekenn-**

**zeichnet, dass** er mindestens auf einer seiner Flächen mit einem Überzug beschichtet ist, undurchlässig gegenüber Wasser und durchlässig gegenüber Wasserdampf, erhalten durch Anwendung des Verfahrens nach irgendeinem der Ansprüche 1 bis 9 oder gemäß der Verwendung nach Anspruch 10 oder auch mit Hilfe der Emulsion nach Anspruch 11.

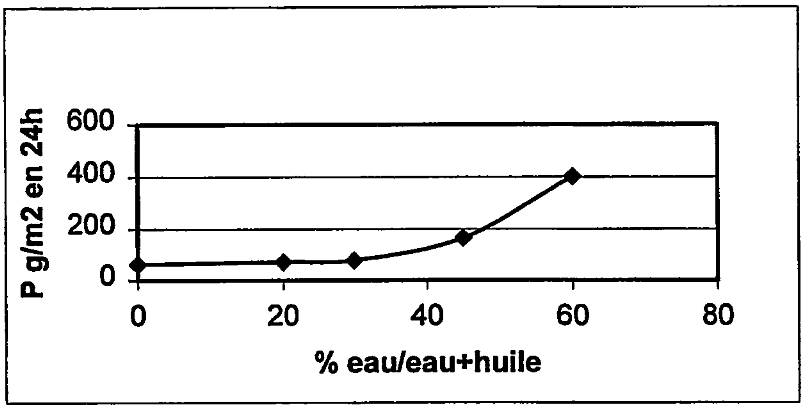
P g/m2 en 24h
600
400
200
0
0
20
40
60
80
% eau/eau+huile

FIG. 1

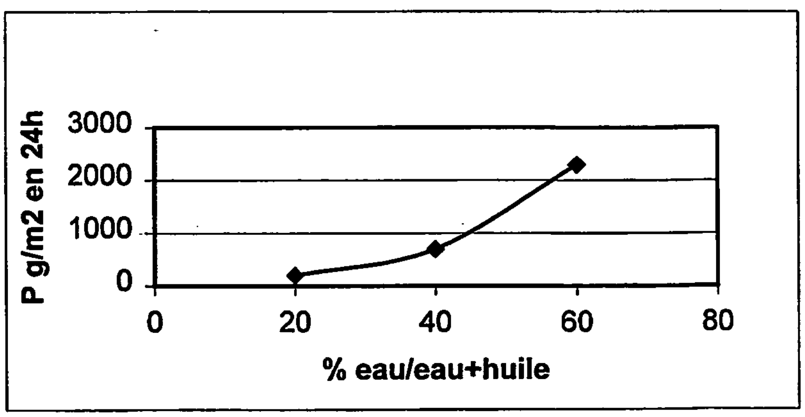
P g/m2 en 24h
3000
2000
1000
0
0
20
40
60
80
% eau/eau+huile

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5948707 B
- US 4187390 B
- US 3953566 B
- US 4194041 B
- WO 9939038 A
- EP 0503826 A
- WO 0126495 A
- WO 9117205 A
- EP 0562922 A
- FR 2724660
- US 3220972 A
- US 3284406 A
- US 3436366 A
- US 3697473 A
- US 4340709 A
- US 3065194 A
- US 3542901 A
- US 3779986 A
- US 4417042 A
- FR 2638752
- US 3678002 A
- US 3888815 A
- US 3933729 A
- US 4064096 A


### Littérature non-brevet citée dans la description


- Handbook des excipients pharmaceutiques. The Pharmaceutical Press, 1994
- Silicone surfactants - Surfactant Science series. 1999, vol. 86
- *Journal of colloïd and interface science,* 1999, vol. 213, 352-359